# EUROPEAN PATENT SPECIFICATION

(11) **EP 1 788 360 B1**
(45) Date of publication and mention of the grant of the patent: **30.07.2008**
(21) Application number: 05380254.2
(22) Date of filing: 21.11.2005
(51) Int. Cl.: G01D 5/347

(54) **Readhead for a measuring device.**
Lesekopf für ein Messgerät
Tête de lecture pour dispositif de mesure

(43) Date of publication of application: 23.05.2007
(73) Proprietor: FAGOR, S.COOP., 20500 Mondragon (Gipuzkoa) (ES)
(72) Inventor: Delgado Jimenez, Juan Carlos, 20500 Mondragon (Gipuzkoa) (ES); Zunzunegui Mugica, Javier, 20550 Aretxabaleta (Gipuzkoa) (ES)
(74) Representative: Igartua, Ismael

(56) References cited:
- US-A- 5 063 685
- US-A1- 2004 101 341
- US-A1- 2004 154 180
- US-B1- 6 349 481

## Description

### TECHNICAL FIELD

The present invention relates to a readhead for a measuring device, and more specifically to a readhead with application means suitable for positioning a graduated scale.

### PRIOR ART

Measuring devices that comprise a static support, a movable support that moves in relation to said static support, and a graduated scale that is secured to said static support are already known. A readhead is connected to the movable support and moves in conjunction with said movable support. The readhead emits a beam of light towards the graduated scale, and depending on the beam of light that is reflected on said graduated scale or that passes through said graduated scale the relative position of the movable support in relation to the static support is determined. If the graduated scale is not perfectly aligned in relation to the longitudinal direction of movement of the readhead, it is not possible to determine said relative position with exactitude.

Application means for a correct alignment of the graduated scale are already known. EP388453B1 discloses a measuring device of this type, wherein an applicator is connected to the movable support. The graduated scale passes through said applicator, said applicator acting as a guide to align said graduated scale on the static support correctly.

US6349481B1 discloses an adjustment element which extends around a scale carrier and which can be disposed in place of the readhead or can be fastened on said readhead. Said scale carrier comprises a groove in which the graduated scale is fastened. By means of said adjustment element, said scale carrier drops behind said adjustment element on a mounting surface in an alignment manner, or is pressed on said mounting surface.

US2004/0101341A1 discloses an adjustment element provided in the readhead, used to align a graduated scale in a mounting surface. Said adjustment element is displaced into an alignment position for aligning the graduated scale, being displaced to a rest position after said alignment.

US2004/0154180A1 discloses a device for aligning a scale in a mounting surface. Said device comprises a profiled alignment device, provided on the readhead, which works together with a complementary tape profile provided on the graduated scale for aligning said graduated scale.

### DISCLOSURE OF THE INVENTION

The main object of the invention is to provide a measuring device with means for the positioning of a graduated scale on the device itself.

The readhead of the invention is used in measuring devices that comprise a static support and a movable support that moves in relation to the static support in a longitudinal direction X. The readhead is connected to the movable support, and on said static support is positioned a graduated scale, the relative position of said movable support in relation to said static support being determined by means of said readhead and said graduated scale. In order for the determined relative position to be exact, the graduated scale must be correctly aligned in relation to the movement of said readhead in the longitudinal direction X.

Thus, the device also comprises application means so that the graduated scale is positioned on the static support for the purpose of securing it to said static support, thereby ensuring a correct alignment of said graduated scale in relation to the movement of the readhead in the longitudinal direction X.

The application means of the device are comprised in the readhead itself. This enables and makes the positioning of the graduated scale on the device easier, a single element (the readhead) being used both for said positioning and for determining the relative position of the movable support in relation to the static support, thereby avoiding the need to add an additional element (an applicator, for example) to the readhead itself solely for the positioning process, or avoiding the need to replace said readhead with application means during said positioning process.

These and other advantages and characteristics of the invention will be made evident in the light of the drawings and the detailed description thereof.

### DESCRIPTION OF THE DRAWINGS

Fig. 1 is a perspective view of a first embodiment of the readhead of the invention.
Fig. 2 is a view of the bottom part of the readhead of Fig. 1.
Fig. 3 is a perspective view of a second embodiment of the readhead of the invention.
Fig. 4 is a perspective view of a third embodiment of the readhead of the invention.
Fig. 5 is a view of the bottom part of the readhead of Fig. 4.

### DETAILED DISCLOSURE OF THE INVENTION

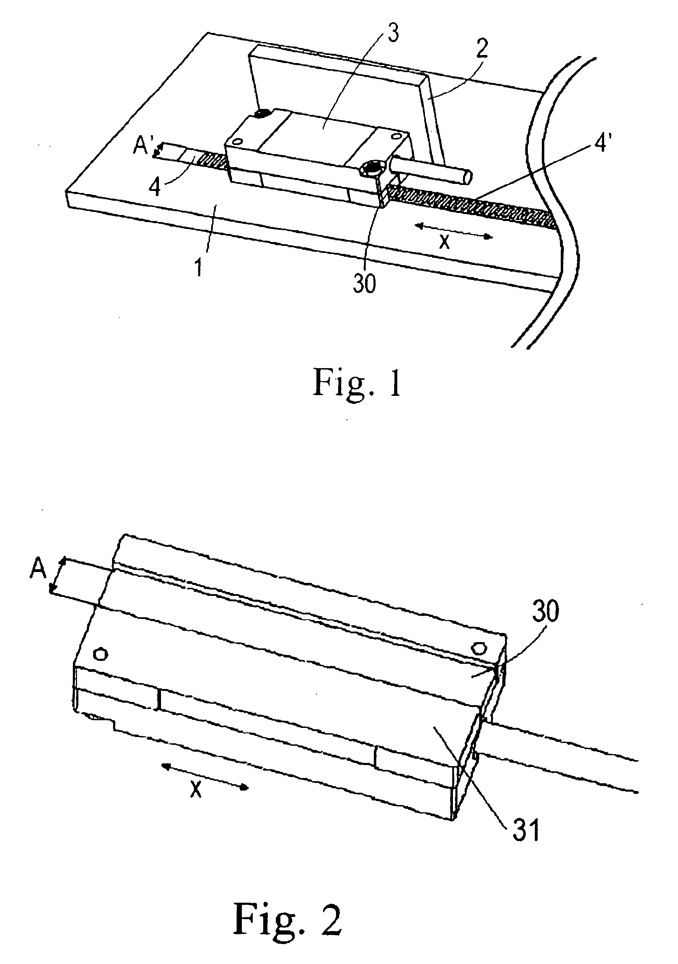

Figure 1 shows an embodiment of the readhead 3 of the invention. Said readhead 3 is used in a measuring device, said device comprising a static support 1 and a movable support 2 suitable for being moved in relation to the static support 1 in a longitudinal direction X. A graduated scale 4 is secured on said fixed support 1, and the readhead 3 is connected to the movable support 2. In a preferred embodiment, said graduated scale 4 is optical, but can also be, for example, magnetic or inductive.

By means of the readhead 3 and the graduated scale 4 the relative position of the movable support 2 in relation to the static support 1 is determined. In the preferred embodiment, said readhead 3 comprises a light emitter (not shown in the figures) which emits a beam of light towards said graduated scale 4, and photodetector means (not shown in the figures). The graduated scale 4 comprises a plurality of marks 4' distributed on the longitudinal direction X all the way along its length, with the beam of light being reflected on said marks 4'. The reflected light reaches the photodetector means and depending on said light, the relative position of the movable support 2 in relation to the static support 1 is determined.

The device also comprises application means so that the graduated scale 4 is positioned on said static support 1, for the purposes of securing said graduated scale 4 to said static support 1. Said application means comprise a guidance configuration disposed on the readhead 3 in order to guide the positioning of the graduated scale 4 on the static support 1. The application means are integrated into said readhead 3, forming a single body.

In a first embodiment, the guidance configuration comprises a groove 30 disposed on the surface 31 of the readhead 3 which is facing the static support 1, as shown in figure 2. Said groove 30 extends all the way along the length of the surface 31 of the readhead 3, in the longitudinal direction X of movement of said readhead 3, but can be extended only along part of the length of said surface 31. The groove 30 comprises a width A substantially equal to the width A' of the graduated scale 4, which can be, for example, 1 cm.

In said first embodiment, an user introduces one end of the graduated scale 4 into the application means, in order to move the movable support 2 in relation to the static support 1 in the direction of the opposite end of said graduated scale 4. In this way, said graduated scale 4 is positioned on the static support 1 by said application means, being disposed longitudinally with the movement of the readhead 3 in relation to said static support 1. The graduated scale 4 comprises adhesive means (not shown in the figures) on the surface that remains on said static support 1, so that as said readhead 3 moves, said graduated scale 4 adheres to said static support 1, said graduated scale 4 being secured to said static support 1.

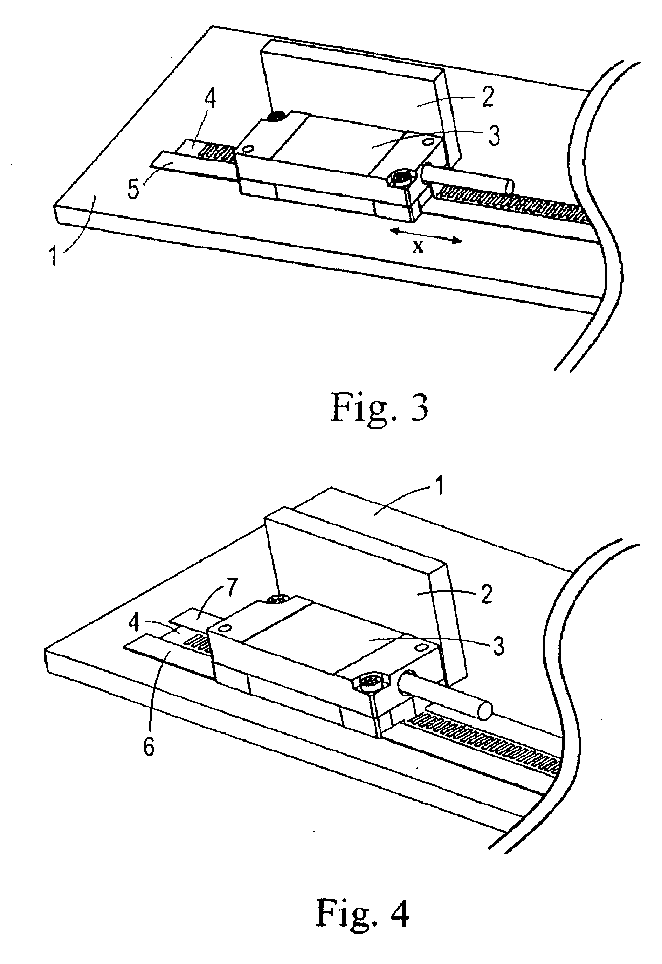

In a second embodiment, the guidance configuration also comprises a groove 30 disposed on the surface 31 of the readhead 3 which is facing the static support 1, as shown in figure 3. The width A of the groove 30 is substantially equal to the width of the reference guide 5, which can be, for example, 1 cm.

In said second embodiment, instead of introducing the graduated scale 4 in said groove 30, an user introduces a reference guide 5, in order to then move the movable support 2 in relation to the static support 1 in the direction of the opposite end of said reference guide 5. Said reference guide 5 comprises adhesive means (not shown in the figures) on the surface which is facing the static support 1, so that as said readhead 3 moves, said reference guide 5 adheres to said static support 1, with said reference guide 5 being secured to said static support 1, aligned in relation to the movement of said readhead 3 in relation to the static support 1. With the reference guide 5 secured to the static support 1, the user positions the graduated scale 4 manually, supporting said graduated scale 4 on said reference guide 5.

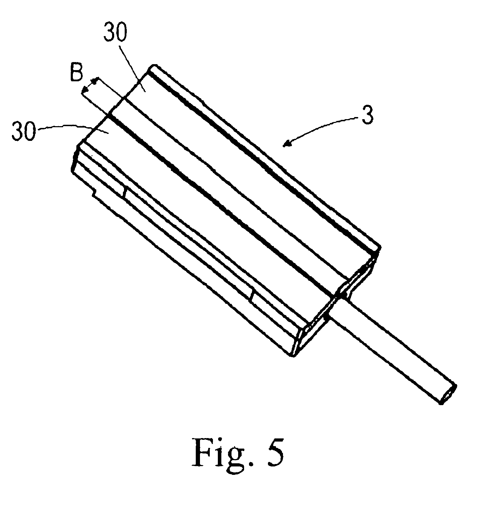

In a third embodiment shown in figures 4 and 5, the guidance means comprise two grooves 30 disposed on the surface 31 of the readhead 3 which is facing the static support 1. Said grooves 30 are parallel to each other and extend all the way along the surface 31 of the readhead 3, in the longitudinal direction X of movement of said readhead 3, but can be extended only along part of the length of said surface 31. The two grooves 30 are separated by a distance B, said distance B being substantially equal to the width A' of the graduated scale 4. Said grooves 30 comprise a width A substantially equal to the width of the reference guides 6 and 7, which can be, for example, 1 cm.

In said third embodiment, a user introduces one end of each reference guide 6, 7 into the grooves 30, in order to then move the readhead 3 in the longitudinal direction X towards the opposite end of said reference guides 6 and 7. The reference guides 6 and 7 comprise adhesive means (not shown in the figures) on the surface which is facing the static support 1, so that as said readhead 3 moves, said reference guides 5 adhere to said static support 1, said reference guides 5 being secured to said static support 1, aligned in relation to the movement of said readhead 3 in relation to the static support 1. Once the reference guides 6 and 7 have been secured to the static support 1, the user positions the graduated scale 4 manually, positioning said graduated scale 4 between said reference guides 6 and 7.

## Claims

1. A measuring device comprising:
a readhead (3);
a static support (1) and a movable support (2) fitted in order to be moved in relation to the static support (1) in a longitudinal direction (X), the readhead (3) being connected to said movable support (2);
a graduated scale (4) which is secured on said static support (1), determining the relative position of said movable support (2) in relation to said static support (1) by means of said readhead (3) and said graduated scale (4); and
application means for guiding the positioning of said graduated scale (4), so that said graduated scale (4) is positioned on said static support (1), for the purpose of securing it to said static support (1), **characterized in that**
said readhead (3) comprises said application means and said application means provides a guidance configuration suitable for obtaining a positioning of the graduated scale (4) on the static support (1),
the applications means are integrated into the readhead (3) forming a single body, the guidance configuration comprising a groove (30) on a surface (31) of the readhead (3) which is facing said static support (1), and said groove (30) extending along said surface (31) in the longitudinal direction (X) and comprising a width (A) substantially equal to the width (A') of the graduated scale (4).

2. Readhead according to any of the claims 1 or 2, wherein the groove (30) extends all the way along the surface (31) of the readhead (3).

3. Method for positioning a graduated scale on a measuring device according to any of the claims 1 to 2
**characterised in that** it comprises the steps of:
incorporating the readhead (3) which comprises the application means;
passing the graduated scale (4) through said application means; and
moving the movable support (2) in relation to the static support (1), so that said graduated scale (4) is positioned on the static support (1) by said application means, being disposed longitudinally with the movement of the readhead (3) in relation to said static support (1).

4. A measuring device comprising:
a readhead (3);
a static support (1) and a movable support (2) fitted in order to be moved in relation to the static support (1) in a longitudinal direction (X), the readhead (3) being connected to said movable support (2);
a graduated scale (4) which is secured on said static support (1), determining the relative position of said movable support (2) in relation to said static support (1) by means of said readhead (3) and said graduated scale (4);
at least a reference guide (5,6,7) for guiding the positioning of said graduated scale (4), and
application means for guiding the positioning of said reference guides (5), so that said graduated scale (4) is positioned on said static support (1) for the purpose of securing it to said static support (1), **characterized in that**
said readhead (3) comprises said application means and said application means provides a guidance configuration suitable for obtaining a positioning of the graduated scale (4) on the static support (1),
the applications means (30) are integrated into the readhead (3) forming a single body, the guidance configuration comprising at least one groove (30) on a surface (31) of the readhead (3) which is facing said static support (1), and said groove (30) extending along said surface (31) in the longitudinal direction (X) and comprising a width (A) substantially equal to the width of the reference guide (5, 6, 7).

5. The measuring device according to claim 4, wherein the groove (30) extend all the way along the surface (31) of the readhead (3).

6. The measuring device according to any of the claims 4 or 5, wherein the application means comprises two parallel grooves (30), said grooves (30) being separated by a distance (B) substantially equal to the width (A') of the graduated scale (4).

7. Method for positioning a graduated scale on a measuring device according to any of the claims 5 or 6,
**characterised in that** it comprises the steps of:
incorporating the readhead (3) which comprises the application means;
passing at least one reference guide (5,6,7) through said application means;
moving the movable support (2) in relation to the static support (1), so that the reference guide (5,6,7) is positioned on the static support (1) by said application means, being disposed longitudinally with the movement of the readhead (3) in relation to said static support (1); and
positioning the graduated scale (4) on the static support (1), supporting it on the reference guide (5,6,7), so that said reference guide (5,6,7) acts as a guide for said positioning.

## Patentansprüche

1. Ein Messgerät, umfassend:
einen Lesekopf (3);
eine statische Halterung (1) und eine bewegliche Halterung (2), so angepasst, dass sie im Verhältnis zur statischen Halterung (1) in Längsrichtung (X) bewegt werden kann, wobei der Lesekopf (3) mit der beweglichen Halterung (2) verbunden ist;
eine Teilstrichskala (4), die an der statischen Halterung (1) befestigt ist und die relative Position der beweglichen Halterung (2) zur statischen Halterung (1) mittels dem Lesekopf (3) und der Teilstrichskala (4) bestimmt; und
Anwendungsvorrichtungen zum Führen der Positionierung der Teilstrichskala (4), so dass die Teilstrichskala (4) an der statischen Halterung (1) positioniert wird, um sie an der statischen Halterung (1) zu sichern,
**dadurch gekennzeichnet,**
**dass** der Lesekopf (3) die Anwendungsvorrichtungen umfasst und die Anwendungsvorrichtungen eine Führung darstellen, die geeignet ist, um die Positionierung der Teilstrichskala (4) an der statischen Halterung (1) zu erreichen, und
**dass** die Anwendungsvorrichtungen in den Lesekopf (3) integriert sind und einen einzigen Körper bilden, wobei die Führung eine Rille (30) an der Fläche (31) des Lesekopfs (3) umfasst, die zur statischen Halterung (1) hingewendet ist, und die Rille (30) sich entlang der Fläche (31) in Längsrichtung (X) erstreckt und eine Breite (A) umfasst, die im Wesentlichen gleich zur Breite (A') der Teilstrichskala (4) ist.

2. Lesekopf nach einem der Ansprüche 1 oder 2, wobei sich die Rille (30) über die gesamte Länge der Fläche (31) des Lesekopfs (3) erstreckt.

3. Verfahren zum Positionieren der Teilstrichskala an einem Messgerät gemäß einem der Ansprüche 1 bis 2,
**dadurch gekennzeichnet, dass** es folgende Schritte umfasst:
Aufnahme des Lesekopfs (3), der die Anwendungsvorrichtungen umfasst;
Durchführen der Teilstrichskala (4) durch die Anwendungsvorrichtungen und Bewegen der beweglichen Halterung (2) im Verhältnis zur statischen Halterung (1), so dass die Teilstrichskala (4) an der statischen Halterung (1) durch die Anwendungsvorrichtungen positioniert wird, indem sie längs mit der Bewegung des Lesekopfs (3) im Verhältnis zur statischen Halterung (1) verlagert wird.

4. Ein Messgerät, umfassend:
einen Lesekopf (3);
eine statische Halterung (1) und eine bewegliche Halterung (2), so angepasst, dass sie im Verhältnis zur statischen Halterung (1) in Längsrichtung (X) bewegt werden kann, wobei der Lesekopf (3) mit der beweglichen Halterung (2) verbunden ist;
eine Teilstrichskala (4), die an der statischen Halterung (1) befestigt ist und die relative Position der beweglichen Halterung (2) zur statischen Halterung (1) mittels dem Lesekopf (3) und der Teilstrichskala (4) bestimmt;
mindestens eine Referenzführung (5,6,7) zum Führen der Positionierung der Teilstrichskala (4), und
Anwendungsvorrichtungen zum Führen der Positionierung der Referenzführungen (5), so dass die Teilstrichskala (4) an der statischen Halterung (1) positioniert wird, um sie an der statischen Halterung (1) zu sichern,
**dadurch gekennzeichnet, dass**
der Lesekopf (3) die Anwendungsvorrichtungen umfasst und die Anwendungsvorrichtungen eine Führung darstellen, die geeignet ist, um die Positionierung der Teilstrichskala (4) an der statischen Halterung (1) zu erreichen, und
dass die Anwendungsvorrichtungen (30) in den Lesekopf (3) integriert sind und einen einzigen Körper bilden, wobei die Führung mindestens eine Rille (30) auf einer Fläche (31) des Lesekopfs (3) umfasst, die zur statischen Halterung (1) hingewendet ist, und sich die Rille (30) entlang der Fläche (31) in Längsrichtung (X) erstreckt und eine Breite (A) umfasst, die im Wesentlich gleich der Breite der Referenzführung (5,6,7) ist.

5. Messgerät gemäß Anspruch 4, wobei sich die Rille (30) über die gesamte Länge der Fläche (31) des Lesekopfs (3) erstreckt.

6. Messgerät gemäß eines der Ansprüche 4 oder 5, wobei die Anwendungsvorrichtungen zwei parallele Rillen (30) umfassen, wobei die Rillen (30) von einem Abstand (B) getrennt sind, der im Wesentlichen gleich der Breite (A') der Teilstrichskala (4) ist.

7. Verfahren zum Positionieren der Teilstrichskala an einem Messgerät gemäß einem der Ansprüche 5 oder 6,
**dadurch gekennzeichnet, dass** es folgende Schritte umfasst:
Aufnahme des Lesekopfs (3), der die Anwendungsvorrichtungen umfasst;
Durchführen von mindestens einer Referenzführung (5,6,7) durch die Anwendungsvorrichtungen,
Bewegen der beweglichen Halterung (2) im Verhältnis zur statischen Halterung (1), so dass die Referenzführung (5,6,7) an der statischen Halterung (1) durch die Anwendungsvorrichtungen positioniert wird, indem sie längs mit der Bewegung des Lesekopfs (3) im Verhältnis zur statischen Halterung (1) verlagert wird, und
Positionieren der Teilstrichskala (4) an der statischen Halterung (1), wobei sie an der Referenzführung (5,6,7) gehalten wird, so dass die Referenzführung (5,6,7) als Führung für die Positionierung dient.

## Revendications

1. Un appareil de mesure comprenant :
une tête de lecture (3) ;
un support statique (1) et un support mobile (2) posé afin d'être déplacé par rapport au support statique (1) dans un sens longitudinal (x), la tête de lecture (3) étant connectée audit support mobile (2) ;
une échelle graduée (4) fixée de manière sécurisée audit support statique (1), déterminant la position relative dudit support mobile (2) par rapport audit support statique (1) au moyen de ladite tête de lecture (3) et de ladite échelle graduée (4) ; et
un dispositif d'application pour guider le positionnement de ladite échelle graduée (4) de manière à ce que l'échelle graduée (4) soit positionnée sur ledit support statique (1) dans le but de le fixer de manière sécurisée audit support statique (1), **caractérisé en ce que** ladite tête de lecture (3) comprend ledit dispositif d'application et que ledit dispositif d'application fournit une configuration de guidage permettant d'obtenir un positionnement de l'échelle graduée (4) sur le support statique (1), les dispositifs d'application sont intégrés à la tête de lecture (3) formant un seul corps, la configuration de guidage comprenant une rainure (30) à la surface (31) de la tête de lecture (3) qui fait face au support statique (1), et ladite rainure (30) s'étendant le long de ladite surface (31) dans le sens longitudinal (x) et comprenant une largeur (A) substantiellement égale à la largeur (A') de l'échelle graduée (4).

2. Tête de lecture selon l'une quelconque des revendications 1 ou 2, où la rainure (30) s'étend sur tout le long de la surface (31) de la tête de lecture (3).

3. Méthode pour le positionnement d'une échelle graduée sur un appareil de mesure selon l'une quelconque des revendications 1 à 2,
**caractérisée en ce qu'**elle se compose des étapes :
d'incorporation de la tête de lecture (3) qui comprend le dispositif d'application ;
d'insertion de l'échelle graduée (4) dans ledit dispositif d'application ; et
de déplacement du support mobile (2) par rapport au support statique (1), de telle manière que la dite échelle graduée (4) est positionnée sur le support statique (1) par ledit dispositif d'application, étant disposé de manière longitudinale avec le déplacement de la tête de lecture (3) par rapport audit support statique (1).

4. Un appareil de mesure comprenant :
une tête de lecture (3) ;
un support statique (1) et un support mobile (2) posé afin d'être déplacé par rapport au support statique (1) dans un sens longitudinal (x), la tête de lecture (3) étant connectée audit support mobile (2);
une échelle graduée (4) qui est fixée de manière sécurisée audit support statique (1), déterminant la position relative dudit support mobile (2) par rapport audit support statique (1) au moyen de ladite tête de lecture (3) et de ladite échelle graduée (4) ;
au moins un guide de référence (5, 6, 7) pour guider le positionnement de ladite échelle graduée (4) et
le dispositif d'application pour le guidage du positionnement desdits guides de référence (5) de telle manière que ladite échelle graduée (4) est positionnée sur ledit support statique (1) afin de la fixer de manière sécurisé sur ledit support statique (1), **caractérisé en ce que**
ladite tête de lecture (3) comprend ledit dispositif d'application et ledit dispositif d'application fournit une configuration de guidage qui permet d'obtenir un positionnement de l'échelle graduée (4) sur le support statique (1), les dispositifs d'application (30) sont intégrés à la tête de lecture (3), ne formant qu'un seul corps, la configuration de guidage comprenant au moins une rainure (30) sur la surface (31) de la tête de lecture (3) qui fait face audit support statique (1) et ladite rainure (30) s'étendant le long de ladite surface (31) dans le sens longitudinal (x) et comprenant une largeur (A) substantiellement égale à la largeur du guide de référence (5, 6, 7).

5. Appareil de mesure selon la revendication 4 où la rainure (30) s'étend sur tout le long de la surface (31) de la tête de lecture (3).

6. Appareil de mesure selon l'une quelconque des revendications 4 ou 5 où le dispositif d'application comprend deux rainures parallèles (30), lesdites rainures (30) étant séparées par une distance (B) substantiellement égale à la largeur (A') de l'échelle graduée (4).

7. Méthode pour le positionnement d'une échelle graduée sur un appareil de mesure selon l'une quelconque des revendications 5 ou 6,
**caractérisée en ce qu'**elle se compose des étapes :
d'incorporation de la tête de lecture (3) qui comprend le dispositif d'application ;
d'insertion d'au moins un guide de référence (5, 6, 7) dans ledit dispositif d'application ;
de déplacement du support mobile (2) par rapport au support statique (1), de telle manière que le guide de référence (5, 6, 7) est positionné sur le support statique (1) par ledit dispositif d'application, étant disposé de manière longitudinale avec le déplacement de la tête de lecture (3) par rapport audit support statique (1) ; et
de positionnement de l'échelle graduée (4) sur le support statique (1) qui sert de support au guide de référence (5, 6, 7), de telle manière que ledit guide de référence (5, 6, 7) oriente et guide ledit positionnement.
